# EUROPÄISCHE PATENTSCHRIFT

(11) **EP 0 355 448 B1**
(45) Veröffentlichungstag und Bekanntmachung des Hinweises auf die Patenterteilung: **09.02.1994**
(21) Anmeldenummer: 89113757.2
(22) Anmeldetag: 26.07.1989
(51) Int. Cl.: H02B 1/20

(54) **Paketierte Sammelschiene**
Bus bars package
Bloc de barres omnibus

(30) Priorität: 16.08.1988 DE 3827683
(43) Veröffentlichungstag der Anmeldung: 28.02.1990
(73) Patentinhaber: Licentia Patent-Verwaltungs-GmbH, 60596 Frankfurt (DE)
(72) Erfinder: Bohnenberger, Willy, D-6452 Mainahusen (DE); Haxel, Gerd, D-6453 Seligenstadt (DE); Krüger, Joachim, D-6452 Hainburg (DE); Floors, Peter, D-8753 Obrenburg (DE); Steuernagel, Gernot, D-6050 Offenbach (DE)
(74) Vertreter: Erbacher, Alfons, Dipl.-Ing.

(56) Entgegenhaltungen:
- EP-A- 0 180 206
- DE-A- 3 121 964
- DE-A- 3 438 499
- FR-A- 2 453 521

## Beschreibung

Die Erfindung bezieht sich auf eine paketierte Sammelschiene mit einem länglichen Kunststoffgehäuse, das ein Bodenteil, zwei parallele Längsseitenwände und parallel zu den Längsseitenwänden verlaufende, innere Trennwände enthält, durch die Kammern gebildet werden, in denen jeweils eine Stromschiene isoliert von den benachbarten Stromschienen angeordnet ist, wobei die Länsseitenwände an der Unterseite der Sammelschienen über das Bodenteil hinausragende Verlängerungsabschnitte aufweisen, deren Enden rechtwinklig nach innen abgewinkelt sind, und wobei an den stirnseitigen Enden des Kunststoffgehäuses Abdeckplatten befestigt sind.

Eine derartige Sammelschiene ist bereits bekannt (EP-A- 0 180 206). Diese Sammelschiene ist als selbsttragende Einheit ausgebildet, die einfach und schnell an ebenen, im Abstand voneinander auf gleichem Niveau angeordneten Auflageflachen befestigt werden kann. Hierzu sind an die Innenflächen der abgewinkelten Enden mindestens ein Paar je mit einem Träger verbindbare Zwischenplatten, die kürzer als das Kunststoffgehäuse sind, mit Längsränderabschnitten unter Federvorspannung in den Raum zwischen den Verlängerungsabschnitten einrückbar. Eine Längsverschiebung der in das Kunststoffgehäuse eingesetzten Zwischenplatte zu dem vorgesehenen Einbauort erübrigt sich deshalb. Die Zwischenplatten können vorab mit Trägern in Gestellen oder Schaltschränken verbunden sein. Die paketierte Sammelschiene wird durch Einschnappen der Zwischenplatten über diese mit den Trägern verbunden.

Bekannt ist auch ein paketierte Sammelschiene mit einem länglichen Kunststoffgehäuse, das zwei parallele Seitenwände und parallel zu diesen verlaufende innere Trennwände enthält. Die Seitenwände und Trennwände erstrecken sich längs der Kammern, in denen Stromschienen angeordnet sind. Die Kammeröffnungen auf der Oberseite der Sammelschiene sind durch eine plattenförmige Abdeckung verschlossen, die die Sammelschienen in den Kammern festhält (FR-A-2453 521).

Der Erfindung liegt die Aufgabe zugrunde, eine paketierte Sammelschiene der eingangs beschriebenen Gattung derart weiterzuentwickeln, daß die Stromschienen gegen Herausziehen gesichert werden und gleichzeitig eine umfassende Versteifung der Enden des Kunststoffgehäuses erreicht wird.

Die Aufgabe wird erfindungsgemäß dadurch gelöst, daß die Abdeckungsplatten einerseits Vorsprünge, die je ein Stück in eine an ihrem Ende von einer Stromschiene freie Kammer ragen und zumindest an die Kammerstelle mit der geringsten Weite angepaßt sind, und andererseits Vorsprünge aufweisen, die jeweils in einen Raum, der von den Verlängerungsabschnitten mit den abgewinkelten Enden und einem vom Bodenteil vorspringenden Wandabschnitt teilweise eingeschlossen ist, ein Stück hineinragen und an dessen Querschnitt angepaßt sind, daß die Abdeckungsplatten je mit einer um 90 Grad abgewinkelten Platte das Kunststoffgehäuse ein Stück auf derjenigen Seite umgreifen, auf der längliche Kammeröffnungen vorhanden sind und daß die Platte Aussparungen für über das Kunststoffgehäuse hinausragende Anschlußelemente der Stromschienen aufweist.

Die Abdeckungsplatten halten die Stromschienen an ihren, den Abdeckungen benachbarten Stellen in den Kammern zurück. Die Stromschienen können sich daher nicht aus den Kammern lösen. Die Sicherung gegen das Herausziehen ist sowohl bei kurzen als auch bei langen Stromschienen wirksam. Die Abdeckungsplatten verhindern daher sowohl das Herausfallen der Stromschienen aus den Stirnseiten der Kammern als auch an den Längsseiten.

Durch die Vorsprünge der Abdeckplatten wird eine formschlüssige Verbindung zwischen den Abdeckkörpern und dem Kunsstoffgehäuse erzielt. Die Abdeckungsplatten bilden mit dem Kunststoffgehäuse eine feste Einheit. Damit wird eine Verstärkung des länglichen Kunststoffgehäuses an den Enden erzielt. Aufgrund der vergrößerten Steifigkeit an den Enden widersteht das Kunststoffgehäuse besser seitlichen Beanspruchungen. Die in die Räume zwischen den Verlängerungsabschnitten ragenden Vorspünge versteifen das Kunststoffgehäuse zusätzlich.

Insbesondere ist es durch die oben beschriebenen Maßnahmen möglich, das längliche Kunststoffgehäuse dünnwandig auszubilden. Beispielsweise können die Stärken der veschiedenen Abschnitte des Kunststoffgehäuses im wesentlichen nach den isolationstechnischen Gesichtspunkten ausgewählt werden.

Es ist nicht erforderlich, daß alle Vorsprünge die gleiche Länge haben. Zweckmäßigerweise sind die Vorsprünge für die äußeren Kammern länger ausgebildet als die Vorsprünge für die inneren Kammern.

Bei einer bevorzugten Ausführungsform ist vorgesehen, daß die Abdeckplatten jeweils eine Auflageplatte aufweisen, die in Höhe des unteren Rands des Kunststoffgehäuses in Längsrichtung des Kunststoffgehäuses nach außen ragen und Ausnehmungen für Befestigungsmittel enthalten. Die Abdeckplatten werden für die Befestigung an Trägern ausgenutzt. Insbesondere können die Ausnehmungen als längliche Schlitze oder Langlöcher ausgebildet sein, so daß die Abdeckplatten beidseitig gegen das längliche Kunststoffgehäuse angedrückt werden können, bevor die feste Verbindung zwischen Träger und Abdeckplatte hergestellt wird.

Die Stromschienen können Noppen aufweisen, die an Schultern in den Kammern anliegen, um die Stromschienen in den Kammern zu befestigen. Eine wesentliche Materialersparnis bei der Stromschienenherstellung ergibt sich, wenn die Anschlußelemente an den länglichen Stromschienen angeschweißt sind. Es ist dann nicht erforderlich, die Stromschienen einschließlich der Anschlüsse aus Vollmaterial zu stanzen. Die Anschlußelemente in Form von Stiften mit quadratischem oder rechteckigem Querschnitt werden an der jeweiligen Stromschiene angeschweißt. Es ist möglich, die Stifte stumpf an einer Schmalseite der jeweiligen Stromschiene anzuschweißen. Die Stifte können aber auch seitlich an die jeweilige Stromschiene mit einem diese überlappenden Ende angeschweißt werden.

Die Erfindung wird im folgenden an Hand eines in einer Zeichnung dargestellten Ausführungsbeispiels näher beschrieben, aus dem sich weitere Einzelheiten, Merkmale und Vorteile ergeben.

Es zeigen:
- Fig. 1: einen Teil einer paketierten Sammelschiene im Längsschnitt,
- Fig. 2: ein Kunststoffgehäuse der paketierten Sammelschiene gemäß Fig. 1 von vorne,
- Fig. 3a,b: eine Stromschiene in Seitenansicht,
- Fig. 4: einen Schnitt längs der Linien I - I der Stromschiene gemäß Fig. 3,
- Fig. 5: eine Abdeckkappe in Seitenansicht,
- Fig. 6: die Abdeckkappe gemäß Fig. 5 von oben,
- Fig. 7: die Abdeckkappe gemäß Fig. 5 von hinten,
- Fig. 8: eine andere Ausführungsform einer Stromschiene im Querschnitt,
- Fig. 9: einen Teil einer Halteschine für die paketierte Sammelschiene von oben,
- Fig. 10: die Halteschiene gemäß Fig. 9 von vorne,
- Fig. 11: die Halteschiene gemäß Fig. 9 in Seitenansicht.

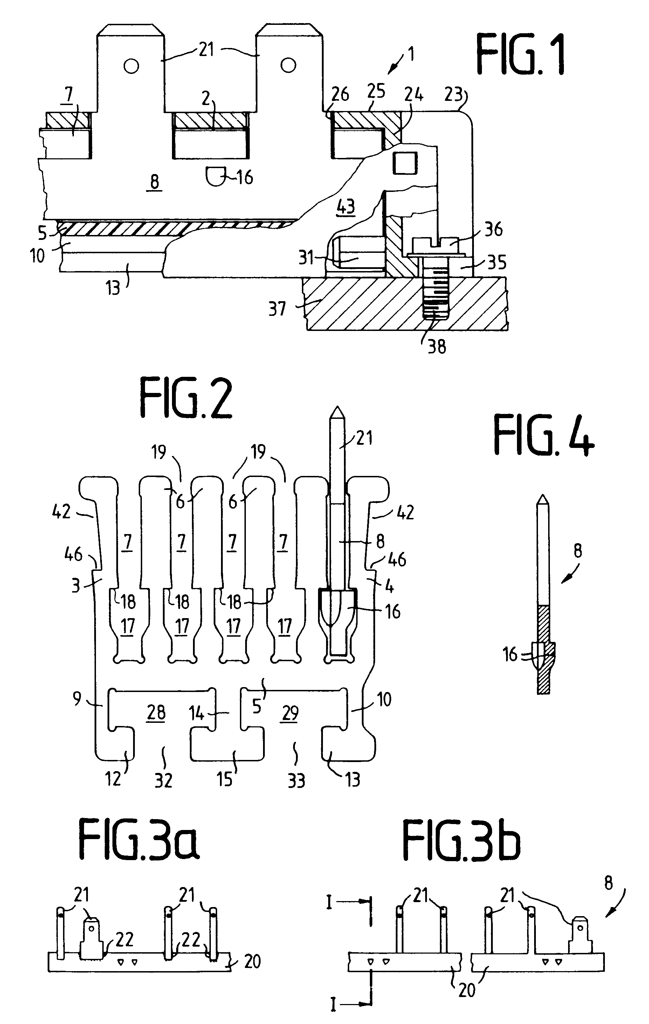

Eine paketierte Sammelschiene 1 enthält ein längliches Kunststoffgehäuse 2, das zwei Längsseitenwände 3,4 ein Bodenteil 5 und im Inneren mehrere Trennwände 6 aufweist, die parallel zueinander und zu den Längsseitenwänden 3,4 verlaufen. Die Längsseitenwände 3,4 und die Trennwände 6 begrenzen jeweils paarweise Kammern 7, in die Stromschienen 8 eingefügt sind, von denen in Fig. 2 lediglich eine Stromschiene 8 dargestellt ist Die Stromschienen 8 bestehen aus verzinntem Kupfer oder einer verzinnten Kupferlegierung und sind durch die Trennwände 6 voneinander isoliert. Von den Längsseitenwänden 3,4 gehen jeweils Verlängerungsabschnitte 9,10 aus, die über das Bodenteil 5 ein Stück hinausragen. Die Verlängerungsabschnitte 9,10 weisen rechtwinklig abgewinkelte Enden 12,13 auf. Von der Mitte des Bodenteils 5 springt ein Wandabschnitt 14 vor, der sich in Längsrichtung des Kunststoffgehäuses 2 erstreckt und T-förmigen Querschnitt hat. Der Querabschnitt 15 des Wandabschnitts 14 erstreckt sich in Höhe der Enden 12,13.

Die Stromschienen 8 haben durch Stanzen hergestellte Noppen 16, die in einer Reihe im Abstand zueinander angeordnet sind. Jeweils zwei benachbarte Noppen 16 springen nach zueinander entgegensetzten Seiten der Stromschienen 8 vor. Nahe an den unteren Enden der Kammern 7 sind Erweiterungen vorgesehen, die Schultern 18 aufweisen. Die Schultern 18 sind so hoch über den Böden der Kammern 7 angeordnet, daß sich die Oberseiten der Noppen 16 an die Schultern 18 legen können. Der Kunststoff des Gehäuses 2 weist eine gewisse Elastizität auf, so daß diejenigen, der oberen Öffnung 19 zugewandten Wände der Kammer 7, deren lichte Weite auf die Stärke der Stromschiene 8 abgestimmt ist, beim Vorbeigleiten der Noppen 16 auseinandergebogen werden.

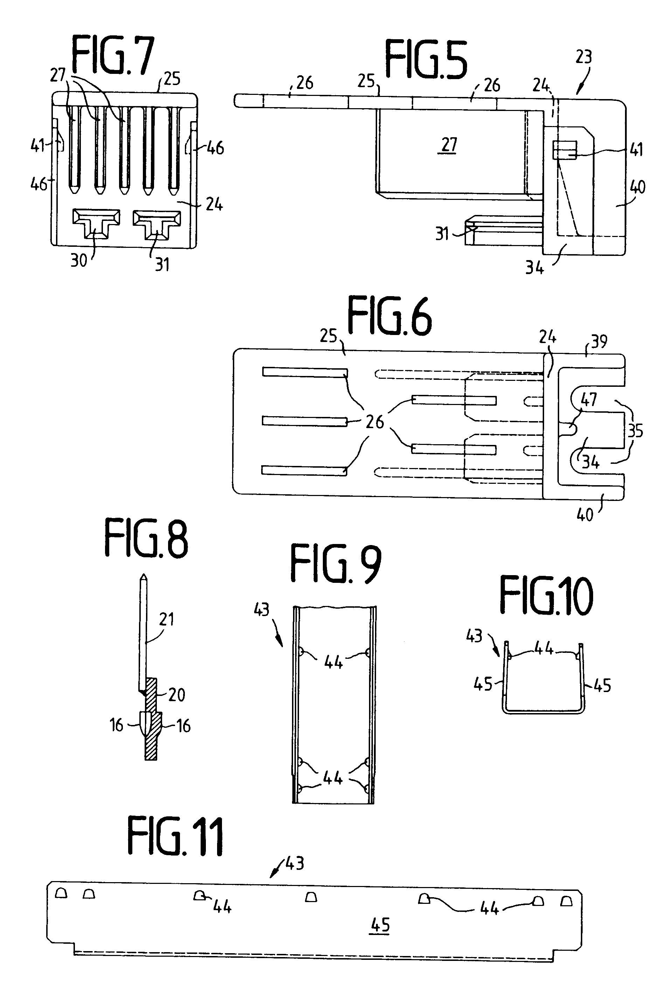

Die Stromschienen setzen sich jeweils aus länglichen, rechteckigen Grundkörpern 20, die rechteckige Querschnitte aufweisen, und Stiften 21 zusammen, die quadratische oder rechteckige Querschnitte aufweisen und eine der länglichen schmalseiten des jeweiligen Grundkörpers 20 überragen. Die breiteren Stifte 21 haben messerartige Formen. Die Stifte 21 ragen bei eingesetzten Stomschienen 8 über das Kunststoffgehäuse 2 hinaus. An die Stifte 21 werden nicht dargestellte Verbindungselemente von Leitungen angeschlossen, die zu Stromverbrauchern verlegt sind, denen über die Stromschienen 8 Betriebsspannungen bzw. Potentiale zur Verfügung gestellt werden. Die Stifte 21 können am Grundkörper mit einem Abschnitt 22 überlappend angeschweißt sein, wie dies in Fig 3a und 8 dargestellt ist. Es ist aber auch möglich, die Stifte 21 stumpf mit einer länglichen Schmalseite des Grundkörpers 20 zu verschweißen. Die entsprechende Stromschiene ist in Fig. 3b und 4 dargestellt. Durch die Verschweißung der Stifte 21 mit den Grundkörpern 20 erübrigt sich die Herstellung der Stromschienen aus Vollmaterial, d.h es tritt eine wesentliche Materialersparnis ein.

Die Kunststoffgehäuse 2 mit den in die Kammern 7 eingesetzten Stromschienen 8 werden stirnseitig durch Abdeckplatten 23 verschlossen. Die Abdeckplatten 23 enthalten je einen Grundplattenkörper 24, der die offenen Stirnseiten der Kammern 7 bedeckt. Am oberen Ende des jeweiligen Grundkörpers 24 ragt eine um 90° gegen die Ebene des Grundkörpers 24 abgewinkelte Platte 25 ein Stück über die Oberseite des Kunststoffgehäuses 2 hinweg.

Da die Stifte in gleichmäßigen, vorgegebenen Abständen an den Grundkörpern 20 befestigt sind, weist die Platte 25 an denjenigen Stellen, an denen die Stromschienen 8 Stifte 21 tragen, rechteckige Aussparungen 26 auf, deren Länge an die maximal vorkommende Länge der Stifte 21 angepaßt ist. Beispielsweise erstreckt sich die Platte 25 über eine Schienenstrecke mit zwei Stiftplätzen. Bei zahlreichen parallelen Kammern 7 kann es günstig sein, die Platte 25 an den ersten Stiftplätzen der Stromschienen der beiden äußeren Kammern nicht mit Aussparungen zu versehen, um auch bei geringer Plattenstärke eine widerstandsfähige Platte 25 zu erhalten. An diesen Stellen dürfen die äußeren Stromschienen dann keine Stifte aufweisen. Die Platten 25 verhindern, daß die Stromschienen aus den Kammern 7 herausfallen können. Beispielsweise können die Kunststoffgehäuse 2 in Gestellen, Schränken oder Magazinen so angebracht werden, daß die Stifte 21 senkrecht nach unten ragen. Falls die Noppen 16 bei äußeren Beanspruchungen der Kunststoffgehäuse die Stromschienen 8 nicht mehr festhalten können, verhindern die Platten 25, daß die Stromschienen 8 aus den Kammern 7 herausfallen.

Mit der Platte 25 und dem Grundkörper 24 sind quaderförmige Vorsprünge 27 verbunden. Die Vorsprünge 27 haben die Form von länglichen Platten, von denen jeweils eine Schmalseite 8 mit der Platte 25 und dem Grundplattenkörper 24 verbunden ist. Die Stärke des Vorsprungs 27 ist jeweils an diejenige Stelle einer Kammer 7 angepaßt, die die kleinste lichte Weite aufweist. Die Höhe des Vorsprungs 27 längs des Grundplattenkörpers 24 entspricht der Tiefe einer Kammer 7. In Längsrichtung der Platte 25 erstreckt sich der jeweilige Vorsprung nicht ganz bis zum Ende der Platte 25. Die Vorsprünge 27 sind an denjenigen Stellen des Grundplattenkörpers 24 und der Platte 25 vorgesehen, an denen sich die Öffnungen der Kammern 7 befinden. Die Vorsprünge 27 ragen ein Stück in die Kammern 7. Die Stromschienen 8 erstrecken sich nicht über die gesamte Länge des Kunststoffgehäuses 2. An den Enden Kunststoffgehäuses 2 sind daher nicht mit Stromschienen ausgefüllte Kammerabschnitte vorhanden, in die die Vorsprünge 27 hineinragen. Die Vorsprünge 27 rufen in Verbindung mit dem Grundplattenkörper 24 und der Platte 25 eine Versteifung des Kunststoffgehäuses 2 an den Enden hervor. Das Kunststoffgehäuse 2 widersteht deshalb auch bei dünnwandiger Ausbildung äußeren Beanspruchungen. Die einzelnen Vorsprünge 27 können für die parallelen Kammern 27 unterschiedlich lang ausgebildet sein. Zweckmäßigerweise sind die beiden äußeren Vorsprünge 27 länger als die anderen Vorsprünge 27 ausgebildet.

Die Verlängerungsabschnitte 9,10 mit den abgewinkelten Enden 12,13, das Bodenteil 5 und der Wandabschnitt 14 mit dem Querabschnitt 15 umgreifen jeweils Räume 28,29, in die weitere, vom Grundplattenkörper 24 ausgehende Vorsprünge 30, 31 ein Stück hineinragen. Die Vorsprünge 30,31 sind jeweils an die Querschnitte der Räume 28,29 angepaßt, die sich bis zu nach unten gerichteten, länglichen Öffnungen 32,33 erstrecken. Die Querschnitte 28,29 sind T-förmig ausgebildet. Durch die Vorsprünge 30,31 wird eine weitere Verstärkung der Enden des Kunststoffgehäuses 2 erreicht.

Vom Grundplattenkörper 24 springt am unteren Ende eine Auflageplatte 34 unter einem rechten Winkel zur Plattenebene und in entgegensetzter Richtung wie die Platte 25 vor. Die Auflageplatte 34 hat etwa die Breite des Kunststoffgehäuses 2 und ragt in dessen Längsrichtung nach außen. In der Auflageplatte 34 sind ein Paar von Ausnehmungen 35 in Form von länglichen Schlitzen vorhanden, die sich in Längsrichtung des Kunststoffgehäuses parallel zueinander erstrecken. Die Ausnehmungen 35 sind für Schrauben 36 bestimmt, mit denen die paketierten Stromschienen 1 jeweils an Trägern 37 angeschraubt werden, die entsprechende Gewindebohrungen 38 enthalten. Bei den Trägern handelt es sich z.B. um Halteschienen in Gestellen, Baugruppen oder Schränken. Da die Ausnehmungen 35 als längliche Schlitze ausgebildet sind, ist ein Ausgleich an Gewindebohrungen 38 mit verschiedenen Abständen möglich.

Die Abdeckplatte 23 enthält zwei Seitenwände 39,40, die jeweils mit dem Grundplattenkörper 24 und der Auflageplatte 24 verbunden sind. Die Seitenwände 39,40 sind in etwa rechteckförmig ausgebildet und versteifen die Abdeckplatten 23 hinsichtlich der Verbindung zwischen dem Grundplattenkörper 34 und der Auflageplatte 24.

An den Außenseiten der Seitenwände 39,40 sind in gleicher Höhe jeweils Einbuchtungen 41 vorgesehen. In gleicher Höhe sind in Längsrichtung der Längsseitenwände 3,4 Vertiefungen 42 vorgesehen.

Zur Verstärkung von Kunststoffgehäusen 2 mit größeren Längen sind U-förmige, federnde Bügel 43 vorgesehen, die die Kunststoffgehäuse von außen umgreifen und die Oberseiten mit den Öffnungen für die Stifte 21 freilassen. Die Bügel 43 bestehen vorzugsweise aus Metall. In Höhe der Vertiefungen 42 und an denjenigen Stellen, an denen sich die Einbuchtungen 41 befinden, sind die Bügel 43 mit nach innen vorspringenden Noppen 44 versehen, die durch Stanzung hergestellt sein können. In ihrer Länge sind die Bügel 43 auf die Länge des Kunststoffgehäuses und der Abdeckplatten 23 so abgestimmt, daß die Enden der Bügel 43 ein Stück die Seitenwände 39,40 überdecken. Hierbei ist es günstig, wenn in den Seitenwänden 39,40 an die Stärke der Seitenwände 45 der Bügel 43 angepaßte Vertiefungen 46 aufweist. Die übrigen Teile der Seitenwände 39 und die Seitenwände 45 verlaufen daher in der gleichen Ebene. Die Noppen 44 legen sich an Schultern 46 der Vertiefungen 42 und an nicht näher bezeichnete Kanten der Einbuchtungen 41 an und halten damit das Kunststoffgehäuse 2 und die Abdeckplatten 23 fest.

Vom Grundplattenkörper 24 kann ein Steg 47 schräg zur Auflageplatte 34 vorspringen, um eine weitere Verstärkung der Abdeckplatte 23 zu erzeugen.

## Patentansprüche

1. Paketierte Sammelschiene (1) mit einem länglichen Kunststoffgehäuse (2), das ein Bodenteil (5), zwei parallele Längsseitenwände (3, 4) und parallel zu den Längsseitenwänden verlaufende, innere Trennwände (6) enthält, durch die Kammern (7) gebildet werden, in denen jeweils eine Stromschiene (8) isoliert von den benachbarten Stromschienen angeordnet ist, wobei die Längsseitenwände (3, 4) an der Unterseite der Sammelschiene (1) über das Bodenteil hinausragende Verlängerungsabschnitte (9, 10) aufweisen, deren Enden (12, 13) rechtwinklig nach innen abgewinkelt sind, und wobei an den stirnseitigen Enden des Kunststoffgehäuses (2) Abdeckplatten (23) befestigt sind, dadurch gekennzeichnet, daß die Abdeckplatten (23) einerseits Vorsprünge (27), die je ein Stück in eine an ihrem Ende von einer Stromschiene (8) freie Kammer (7) ragen und zumindest an die Kammerstelle mit der geringsten Weite angepaßt sind, und andererseits Vorsprünge (30, 31) aufweisen, die jeweils in einen Raum, der von den Verlängerungsabschnitten (9, 10) mit den abgewinkelten Enden (12, 13) und einem vom Bodenteil (2) vorspringenden Wandabschnitt (14) teilweise eingeschlossen ist, ein Stück hineinragen und an dessen Querschnitt angepaßt sind, daß die Abdeckplatten (23) je mit einer um 90 Grad abgewinkelten Platte (25) das Kunststoffgehäuse (2) ein Stück auf derjenigen Seite umgreifen, auf der längliche Kammeröffnungen vorhanden sind, und daß die Platte (25) Aussparungen (26) für über da Kunststoffgehäuse (2) hinausragende Anschlußelemente der Stromschienen (8) aufweist.

2. Sammelschiene nach Anspruch 1 dadurch gekennzeichnet, daß die Vorsprünge (27) für die äußeren Kammern (7) länger ausgebildet sind als die Vorsprünge für die inneren Kammern (7).

3. Sammelschiene nach Anspruch 1 oder 2 dadurch gekennzeichnet, daß die Abdeckplatten (23) jeweils Verlängerungsplatten (34) aufweisen, die in Höhe des unteren Rands des Kunststoffgehäuses (2) in dessen Längsrichtung nach außen ragen und Ausnehmungen (35) für Befestigungsmittel aufweisen.

4. Sammelschiene nach einem oder mehreren der vorhergehenden Ansprüche, dadurch gekennzeichnet, daß die Stromschienen (8) Noppen (16) aufweisen, die an Schultern (18) in den Kammern (7) anliegen.

5. Sammelschiene nach einem oder mehreren der vorhergehenden Ansprüche, dadurch gekennzeichnet, daß die Stromschienen (8) rechteckige Grundkörper (20) aufweisen, an die Stifte (21) mit quadratischen oder rechteckigen Querschnitten angeschweißt sind.

6. Sammelschiene nach einem oder mehreren der vorhergehenden Ansprüche, dadurch gekennzeichnet, daß das Kunststoffgehäuse (2) auf drei Seiten unter Freilassung der die Kammeröffnungen aufweisenden Oberseite durch einen federnden Bügel (43) umgeben ist.

7. Sammelschiene nach einem oder mehreren der vorhergehendran Ansprüche, dadurch gekennzeichnet, daß der Bügel (43) ein Stück die Abdeckplatte (23) bedeckt.

8. Sammelschiene nach Anspruch 6 oder 7, dadurch gekennzeichnet, daß der Bügel (43) Noppen (44) aufweist, die in Vertiefungen am Kunststoffgehäuse (2) und an den Abdeckplatten (23) einrasten.

## Claims

1. Packaged bus bar (1) with an elongate synthetic material housing (2), which comprises a base member (5), two parallel longitudinal side walls (3, 4), and inner partition walls (6), which extend parallel to the longitudinal side walls and by which chambers (7) are formed, in each of which a respective current rail (8) insulated from the adjacent current rails is arranged, wherein the longitudinal side walls (3, 4) have at the underside of the bus bar (1) prolongation portions (9, 10), which project out beyond the base member and the ends (12, 13) of which are bent over inwardly at right angles, and wherein cover plates (23) are fastened to the front ends of the synthetic material housing (2), characterised thereby that the cover plates (3) have on the one hand projections (27), which each project a bit into a chamber (7) free at its end from a current rail (8) and which are matched at least to the chamber location with the smallest width, and on the other hand projections (30, 31), which each project a bit into a respective space partly closed by the prolongation portions (9, 10) with the bent-over ends (12, 13) and by a wall portion (14) protruding from the base member (2) and which are matched to the cross-section of the space, that the cover plates (23) each engage by a plate (25), which is bent over through 90°, around the synthetic material housing (2) a bit on that side at which the elongate chamber openings are present, and that the plate (25) has recesses (26) for connecting elements, which project out beyond the synthetic material housing (2), of the current rails (8).

2. Bus bar according to claim 1, characterised thereby that the projections (27) for the outer chambers (7) are constructed to be longer than the projections for the inner chambers (7).

3. Bus bar according to claim 1 or 2, characterised thereby that the cover plates (23) each have prolongation plates (34), which project outwardly at the level of the lower edge of the synthetic material housing (2) in the longitudinal direction thereof and which have recesses (35) for fastening means.

4. Bus bar according to one or more of the preceding, claims, characterised thereby that the current rails (8) have knubs (16) which rest against shoulders (18) in the chambers (7).

5. Bus bar according to one or more of the preceding claims, characterised thereby that the current rails (8) have rectangular base bodies (20), to which pins (21) with square or rectangular cross-sections are welded on.

6. Bus bar according to one or more of the preceding claims, characterised thereby that the synthetic material housing (2) is enclosed on three sides by a resilient bracket (43) while leaving free the upper side having the chamber openings.

7. Bus bar according to one or more of the preceding claims, characterised thereby that the bracket (43) covers the cover plates (23) a bit.

8. Bus bar according to claim 6 or 7, characterised thereby that the bracket (43) has knubs (44), which detent in recesses at the synthetic material housing (2) and at the cover plates (23).

## Revendications

1. Bloc de barres omnibus (1) comportant un boîtier en plastique (2) allongé, qui comprend une partie formant fond (5), deux parois de grands côtés parallèles (3, 4), et des cloisons de séparation internes (6), parallèles par rapport aux parois des grands côtés (3, 4), par lesquelles sont formées les chambres (7), dans lesquelles sont disposées chaque fois une barre conductrice (8), isolées des barres conductrices voisines, les parois des grands côtés (3, 4) présentant, sur le côté inférieur de la barre omnibus, des sections de prolongement (9, 10) faisant saillie au-delà de la partie formant fond, dont les extrémités (12, 13) sont coudées vers l'intérieur, à angle droit, et des plaques formant couvercle (23) étant fixées aux extrémités frontales du boîtier en plastique (2), caractérisé en ce que les plaques formant couvercle (23) présentent d'une part des saillies (27), qui chacune pénètrent légèrement dans une chambre (7) exempte de barre conductrice (8) à son extrémité et qui sont adaptées au moins à l'endroit de la chambre le plus étroit, et d'autre part des saillies (30, 31) qui pénètrent chacune légèrement dans un espace fermé partiellement par les sections de prolongement (9, 10) comportant les extrémités coudées (12, 13) et par une section de paroi (14) faisant saillie de la partie formant fond (5), et qui sont adaptées à la section transversale dudit espace, en ce que les plaques formant couvercle (23), entourent légèrement, chacune avec une plaque (25) coudée selon un angle de 90 degrés, le boîtier en plastique (2), sur le côté sur lequel sont situées des ouvertures de chambres allongées et en ce que la plaque (25) comporte des évidements (20) destinés aux éléments de raccordement des barres conductrices (8) faisant saillie au-delà du boîtier en plastique (2).

2. Barre omnibus selon la revendication 1, caractérisée en ce que les saillies (27) destinées aux chambres (7) extérieures sont judicieusement conçues plus longues que les saillies destinées aux chambres intérieures (7).

3. Barre omnibus selon la revendication 1 ou 2, caractérisée en ce que les plaque formant couvercle (23) présentent chacune des plaques de prolongement (34), qui font saillie vers l'extérieur dans le sens longitudinal du boîtier en plastique (2), de la hauteur du rebord inférieur du boîtier en plastique et comportent des évidements (35) destinés à des moyens de fixation.

4. Barre omnibus selon l'une quelconque ou plusieurs des revendications précédentes, caractérisée en ce que les barres conductrices (8) présentent des becs (16), qui reposent sur des épaulements (18) dans les chambres (7).

5. Barre omnibus selon l'une quelconque ou plusieurs des revendications précédentes, caractérisée en ce que les barres conductrices (8) présentent des corps de base (20) sur lesquels sont soudées des tiges (21) avec des sections transversale carrées ou rectangulaires.

6. Barre omnibus selon l'une quelconque ou plusieurs des revendications précédentes, caractérisée en ce que le boîtier en plastique (2) est entouré sur trois côtés par un étrier (43) élastique en laissant libre le côté supérieur comportant les ouvertures des chambres.

7. Barre omnibus selon l'une quelconque ou plusieurs des revendications précédentes, caractérisée en ce que l'étrier (43) recouvre légèrement la plaque formant couvercle (23).

8. Barre omnibus selon les revendications 6 ou 7, caractérisée en ce que l'étrier (43) est pourvu de becs (44), qui s'enclenchent dans des creux situés sur le boîtier en plastique (2) et les plaques formant couvercle (23).
